(19) Europäisches Patentamt
European Patent Office
Office européen des brevets

(11) **EP 2 321 919 B1**

(12) **EUROPEAN PATENT SPECIFICATION**

(45) Date of publication and mention
of the grant of the patent:
**29.07.2020 Bulletin 2020/31**

(51) Int Cl.:
*H04L 1/00* (2006.01)     *H04L 5/00* (2006.01)
*H04W 72/08* (2009.01)    *H04B 17/336* (2015.01)

(21) Application number: **08813480.4**

(22) Date of filing: **02.09.2008**

(86) International application number:
**PCT/SE2008/050983**

(87) International publication number:
**WO 2010/027304 (11.03.2010 Gazette 2010/10)**

(54) **FREQUENCY SELECTIVE SINR REGENERATION**

FREQUENZSELEKTIVE SINR-REGENERATION

RÉGÉNÉRATION DE RAPPORT SIGNAL SUR INTERFÉRENCE PLUS BRUIT SÉLECTIF EN FRÉQUENCE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**18.05.2011 Bulletin 2011/20**

(73) Proprietor: **Telefonaktiebolaget LM Ericsson (publ)**
**164 83 Stockholm (SE)**

(72) Inventors:
• **WAN, Lei**
 **Beijing 100080 (CN)**
• **QIAN, Yu**
 **Xiao Ying, Qing H, Haidan District**
 **Beijing, 100085 (CN)**
• **HU, Yang**
 **Chaoyang District, 100102 Beijing (CN)**
• **ASTELY, David**
 **S-168 56 Bromma (SE)**

(74) Representative: **Brann AB**
 **P.O. Box 3690**
 **Drottninggatan 27**
 **103 59 Stockholm (SE)**

(56) References cited:
 **WO-A-2008/103979    US-A1- 2005 105 589**

• **YOSHITAKA HARA ET AL.: "Pilot-Based Channel Quality Reporting for OFDMA/TDD Systems with Cochannel Interference" IEICE TRANS. COMMUN,, vol. E90-B, no. 9, September 2007 (2007-09), XP002543783 Japan Retrieved from the Internet: URL:http://ietcom.oxfordjournals.org/cgi/r eprint/E90-B/9/2532> [retrieved on 2009-08-31]**
• **DIMAS LOPEZ VILLA ET AL: "Performance of Downlink UTRAN LTE under Control Channel Constraints" VEHICULAR TECHNOLOGY CONFERENCE, 2008. VTC SPRING 2008. IEEE, IEEE, PISCATAWAY, NJ, USA, 11 May 2008 (2008-05-11), pages 2512-2516, XP031256017 ISBN: 978-1-4244-1644-8**

**Description**

TECHNICAL FIELD

Implementations described herein relate generally to communication systems. More particularly, implementations described herein relate to a processing scheme for estimating channel conditions by a device in a communication system.

BACKGROUND

In a communication system, such as a wireless communication system, devices may communicate with one another via a wireless communication link. For example, a wireless station and user equipment (UE) may communicate via wireless channels. A fundamental aspect to maintaining this communication link is link adaptation. For example, the wireless station communicates to the UE in a manner tailored to the channel conditions experienced by the UE. The wireless station is able to perform link adaptation based on receiving one or more channel quality indicators (CQIs) from the UE. For example, the UE may transmit a CQI report that includes one or more CQIs. The UE generates the CQI(s) based on its estimation of existing channel conditions. CQIs may also provide a basis for adapting other communicative operations, such as scheduling, etc.

In wideband communication systems (e.g., employing orthogonal frequency-division multiplexing (OFDM)), the bandwidth may be divided into several sub-bands, where each sub-band covers a number frequency units (e.g., sub-carriers in OFDM). In such a communication system, wideband CQI(s) may cover the whole bandwidth or a part of the whole bandwidth (e.g., one or more sub-bands). Based on this framework, when the frequency domain granularity of the CQI is narrow, the performance of link adaptation, scheduling, and other communicative operations (e.g., power control, timing control, handover, beamforming, etc.) may be improved compared to when the frequency domain granularity of the CQI is broader.

Problems exist, however, when implementing a narrower frequency domain granularity for CQI(s). For example, this typically results in more overhead. This is especially true in time division duplex (TDD) communication systems (e.g., long term evolution LTE-TDD or Worldwide Interoperability for Microwave Access (WiMax)) because of the asymmetric allocation of uplink and downlink timeslots. For example, where a high asymmetry exists (e.g., DL to UL is 9:1) and/or heavy data traffic exists, an UL CQI report channel may support only wideband CQI (e.g., the whole bandwidth or sub-band CQI(s) having a coarse frequency domain granularity). Another problem is that when the frequency domain granularity of the CQI(s) is narrow, the wireless station may take a longer period of time to update and/or adapt. As a result, the performance of the wireless station with respect to link adaptation, scheduling, and/or other communicative operations may be degraded.

While the existence of channel reciprocity in TDD communication systems is well known, channel reciprocity does not resolve all the issues related to link adaptation, scheduling, and other communicative operations. For example, in a TDD communication system, the interference between uplink and downlink directions docs not necessarily correlate at all (i.e., interference is not reciprocal).

In addition to the above, Y. Hara et al. : "Pilot-Based Channel Quality Reporting for OFDMA/TDD Systems with Cochannel Interference", IEICE Trans. Commun, vol. E90-B, no.9, 9 September 2007, pages 2532-2540, describes a concept for replacing the actual transmission of CQIs by estimating the SINRs in the base station from measured pilot signal power levels.

The document D. López Villa et Al.: "Performance of Downlink UTRAN LTE under Control Channel Constraints", Vehicular Technology Conference 2008, pages 2512-2516, IEEE, Piscataway, USA, describes the use of a wideband SINR to determine both the number of required REs and the required transmission power for the Control Channel.

SUMMARY

It is an object to obviate at least some of the above disadvantages and to improve the operability of devices within a communication system.

The above object is met by the subject-matter of the independent claims. Further preferred embodiments are defined in the dependent claims.

BRIEF DESCRIPTION OF THE DRAWINGS

Fig. 1A is a diagram illustrating devices communicating with one another via a wireless communication link;

Fig. 1B is a diagram illustrating an exemplary implementation of the devices in Fig. 1A in which one of the devices is a UE and one is a wireless station;

Fig. 2A is a diagram illustrating exemplary components of the wireless station depicted in Fig. 1B;

Fig. 2B is a diagram illustrating an exemplary functional component for determining frequency selective signal-to-interference-plus-noise ratios (SINRs) of the wireless station depicted in Figs. 1A and 1B;

Figs. 3A-3C are diagrams illustrating exemplary components of the UE depicted in Fig.1B;

Fig. 4 is a flow diagram illustrating an exemplary process for determining a wideband CQI;

Fig. 5 is a diagram illustrating an exemplary scenario in which a wideband CQI may be determined; and

Fig. 6 is a flow diagram illustrating an exemplary process for determining a signal-to- interference-plus noise ratio for an i-th frequency unit.

DETAILED DESCRIPTION

The following detailed description refers to the accompanying drawings. The same reference numbers in different drawings may identify the same or similar elements. Also, the following description does not limit the invention.

The concepts described herein relate to a communication system. The communication system is intended to be broadly interpreted to include any type of wireless network, such as a cellular network and/or a mobile network (e.g., Global System for Mobile Communications (GSM), Long Term Evolution (LTE), Wideband Code Division Multiple Access (WCDMA), Ultra Mobile Broadband (UMB), Universal Mobile Telecommunications Systems (UMTS), ad hoc networks, High-Speed Packet Access (HSPA), etc.), and a non-cellular network (e.g., Worldwide Interoperability for Microwave Access (WiMax), etc.). In this regard, it will be appreciated that the concepts described may be implemented within a wide variety of communication systems. The communication system includes a time division duplex (TDD) communication system where channel reciprocity exists. The terms communication system and network may be used interchangeably throughout this description. The embodiment of the invention provides a device in a communication system that receives wideband CQI(s) to estimate frequency-selective signal-to-interference-plus-noise ratios (SINRs). A device estimates a SINR at a finer frequency level than a reported CQI. The SINR may be estimated with minimal overhead, yet improve the performance of link adaptation, scheduling, and/or other communicative operations, as well as overall system performance, such as throughput, etc.

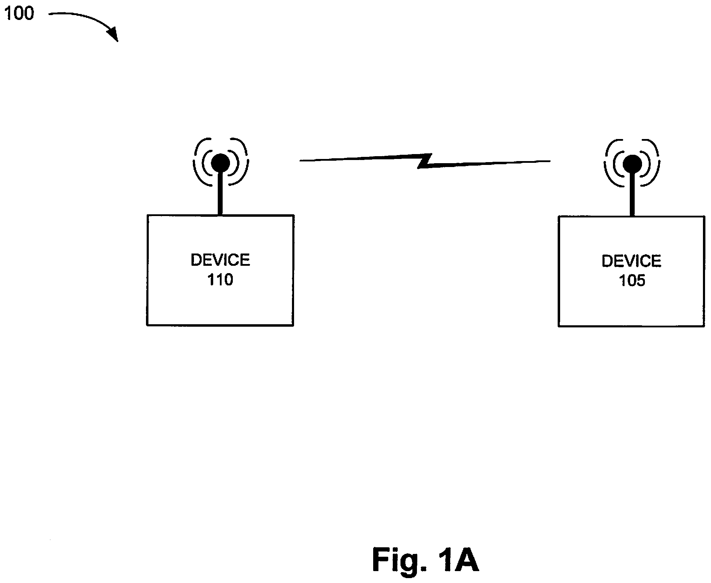

Fig. 1A is a diagram illustrating an exemplary communication system 100 in which the concepts described herein may be implemented. As illustrated, communication system 100 may include a device 105 and a device 110. A device may include, for example, a UE, a gateway, a base station, a relay, a repeater, a combination thereof, or another type of device (e.g., a satellite). The device may operate at layer 1, layer 2, and/or at a higher layer. As illustrated in Fig. 1A, the devices may be communicatively coupled. For example, devices 105 and 110 may be communicatively coupled via wireless communication links (e.g., radio, microwave, etc.).

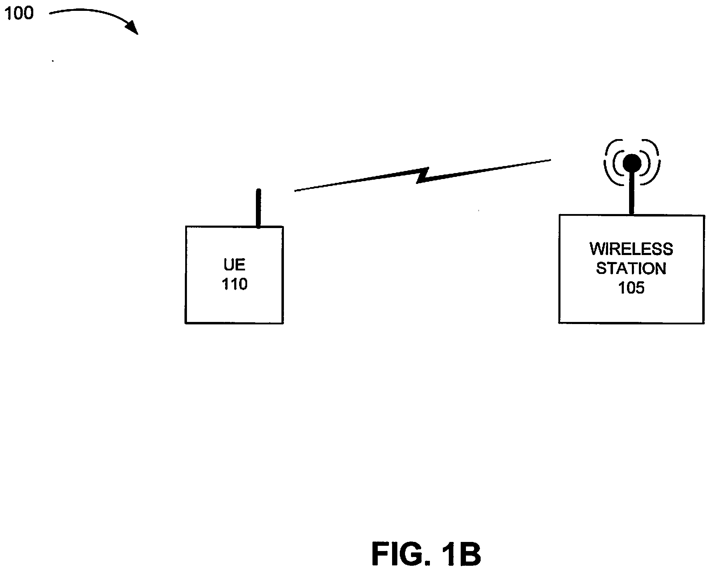

Since the concepts described herein are applicable to a variety of devices in communication system 100, communication system 100 will be described based on the exemplary devices illustrated in Fig. 1B, where device 110 includes a UE and device 105 includes a wireless station. As illustrated in Fig. 1B, wireless station 105 and UE 110 may be communicatively coupled.

Wireless station 105 may include a device having communication capability. The term wireless station is intended to be broadly interpreted to include, for example, a device that may communicate with UE 110. For example, a wireless station may include a base station (BS), a base station transceiver (BTS) (e.g., in a GSM communication system), an eNodeB (e.g., in a LTE communication system), a Node B (e.g., in a UMTS communication system), an access point, or some other type of device.

UE 110 may include a device having communication capability. For example, UE 110 may include a telephone, a computer, a personal digital assistant (PDA), a gaming device, a music playing device, a video playing device, a web browser, a pager, a personal communication system (PCS) terminal, a mobile station, a fixed subscriber unit, a pervasive computing device, and/or some other type of communication device.

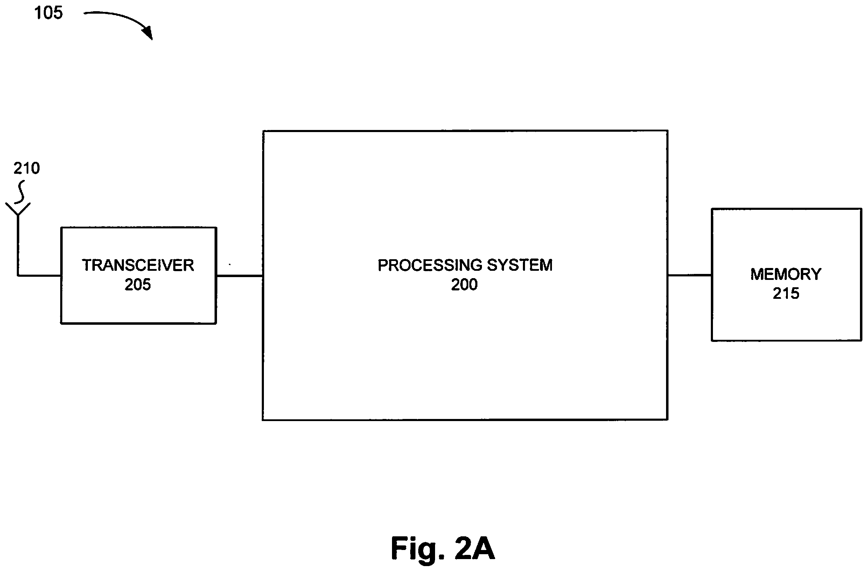

Fig. 2A is a diagram illustrating exemplary components of wireless station 105. As illustrated, wireless station may include a processing system 200, a transceiver 205, an antenna 210, and a memory 215. The term component is intended to be broadly interpreted to include, for example, hardware, software and hardware, firmware, and/or software.

Processing system 200 may include a component capable of interpreting and/or executing instructions. For example, processing system 200 may include a general-purpose processor, a microprocessor, a data processor, a co-processor, a network processor, an application specific integrated circuit (ASIC), a controller, a programmable logic device, a chipset, and/or a field programmable gate array (FPGA). Processing system 200 may control one or more other components of wireless station 105. Processing system 200 may be capable of performing various communication-related processing (e.g., signal processing, channel estimation, beamforming, power control, link adaptation, scheduling, etc.).

Transceiver 205 may include a component capable of transmitting and/or receiving information over wireless channels via antennas 210. For example, transceiver 205 may include a transmitter and a receiver. The transmitter may map symbols into a representation appropriate for the transmission medium or channel (e.g., a radio channel) and may couple the symbols to the transmission medium via antenna 210. The receiver may include, for example, a RAKE or a Generalized RAKE (G-RAKE) architecture. Transceiver 205 may be capable of performing various communicative processing (e.g., de/modulation, de/interleaving, equalizing, filtering, de/coding, amplifying, sampling, forward error correction (FEC), etc.). Antenna 210 may include a component capable of receiving information and transmitting information via wireless channels. Antenna 210 may include a multi-antenna system (e.g., a MIMO antenna system). Antenna 210 may provide one or more forms of diversity (e.g., spatial, pattern, or polarization).

Memory 215 may include a component capable of storing information (e.g., data and/or instructions). For example, memory 215 may include a random access memory (RAM), a dynamic random access memory (DRAM), a static random access memory (SRAM), a synchronous dynamic random access memory (SDRAM), a ferroelectric random access memory (FRAM), a read only memory (ROM), a programmable read only memory (PROM), an erasable programmable read only memory (EPROM), an electrically erasable programmable read only memory (EEPROM), and/or a flash memory.

Although Fig. 2A illustrates exemplary components of wireless station 105, in other implementations, wireless station 105 may include fewer, additional, and/or different components than those depicted in Fig. 2A. It will be appreciated that one or more components of wireless station 105 may be capable of performing one or more other operations associated with one or more other components of wireless station 105.

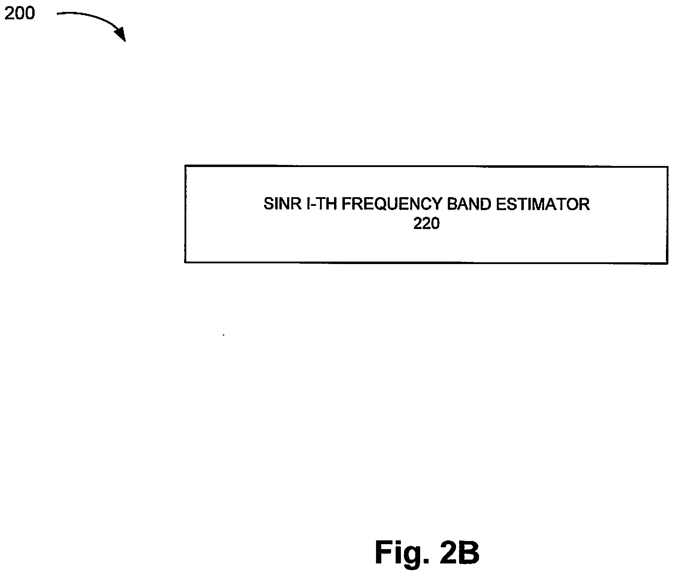

Fig. 2B is a diagram illustrating a SINR I-th Frequency Band Estimator (SINR I-th FBE) 220 capable of calculating frequency selective SINR(s) based on wideband CQI(s) or coarse frequency domain CQI(s). In one example, SINR I-th FBE 220 may be implemented in processing system 200 of wireless station 105. However, it will be appreciated that SINR I-th FBE 220 may be implemented in connection with, for example, other components (e.g., transceiver 205), in combination with two or more components (e.g., processing system 200 and transceiver 205), or as an additional component to those previously described in Fig. 2A. The operations performed by the SINR I-th FBE 220 for calculating frequency selective SINR(s) will be described in greater detail below.

Although Fig. 2B illustrates an exemplary functional component, in other implementations, wireless station 105 may include additional and/or different components than those described in Fig. 2B. Additionally, or alternatively, the operations associated with the functional component may be performed in a distributed manner (e.g., in more than one device).

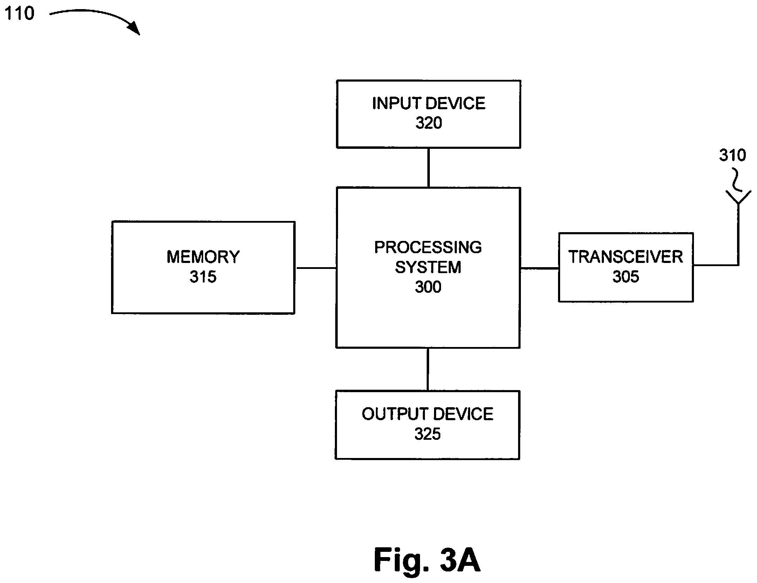

Fig. 3A is a diagram illustrating exemplary components of UE 110. As illustrated, UE 110 may include a processing system 300, a transceiver 305, an antenna 310, a memory 315, an input device 320, and an output device 325.

Processing system 300 may include a component capable of interpreting and/or executing instructions. For example, processing system 300 may include, a general-purpose processor, a microprocessor, a data processor, a co-processor, a network processor, an application specific integrated circuit (ASIC), a controller, a programmable logic device, a chipset, and/or a field programmable gate array (FPGA). Processing system 300 may control one or more other components of UE 110. Processing system 300 may be capable of performing various communicative processing (e.g., signal processing, channel estimation, power control, timing control, etc.).

Transceiver 305 may include a component capable of transmitting and/or receiving information over wireless channels via antennas 310. For example, transceiver 305 may include a transmitter and a receiver. Transceiver 305 may be capable of performing various communication-related processing (e.g., filtering, de/coding, de/modulation, etc.). Antenna 310 may include a component capable of receiving information and transmitting information via wireless channels. Antenna 310 may include a multi-antenna system (e.g., a MIMO antenna system).

Memory 315 may include a component capable of storing information (e.g., data and/or instructions). For example, memory 315 may include a random access memory (RAM), a dynamic random access memory (DRAM), a static random access memory (SRAM), a synchronous dynamic random access memory (SDRAM), a ferroelectric random access memory (FRAM), a read only memory (ROM), a programmable read only memory (PROM), an erasable programmable read only memory (EPROM), an electrically erasable programmable read only memory (EEPROM), and/or a flash memory.

Input device 320 may include a component capable of receiving an input from a user and/or another device. For example, input device 320 may include a keyboard, a keypad, a mouse, a button, a switch, a microphone, a display, and/or voice recognition logic.

Output device 325 may include a component capable of outputting information to a user and/or another device. For example, output device 325 may include a display, a speaker, one or more light emitting diodes (LEDs), a vibrator, and/or some other type of visual, auditory, and/or tactile output device.

Although Fig. 3A illustrates exemplary components of UE 110, in other implementations, UE 110 may include fewer, additional, and/or different components than those depicted in Fig. 3A. For example, UE 110 may include a hard disk or some other type of computer-readable medium along with a corresponding drive. The term "computer-readable medium," as used herein, is intended to be broadly interpreted to include, for example, a physical or a logical storing device. It will be appreciated that one or more components of UE 110 may be capable of performing one or more other operations associated with one or more other components of UE 110.

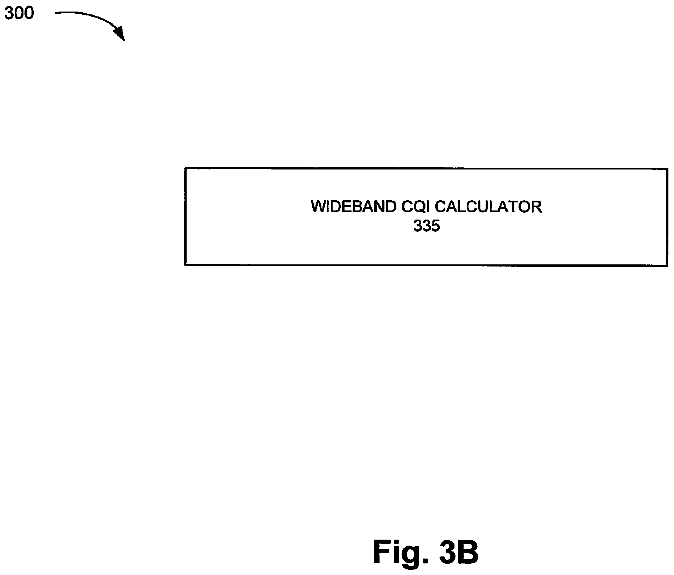

Fig. 3B is a diagram illustrating a wideband CQI calculator 335 capable of determining a wideband CQI(s). In one embodiment, wideband CQI calculator 335 may be implemented in processing system 300. However, it will be appreciated that wideband CQI calculator 335 may be implemented in connection with, for example, other components (e.g., transceiver 305), in combination with two or more components (e.g., processing system 300 and transceiver 305), or as an additional component to those previously described in Fig. 3A. The operations performed by wideband CQI calculator 335 will be described in greater detail below.

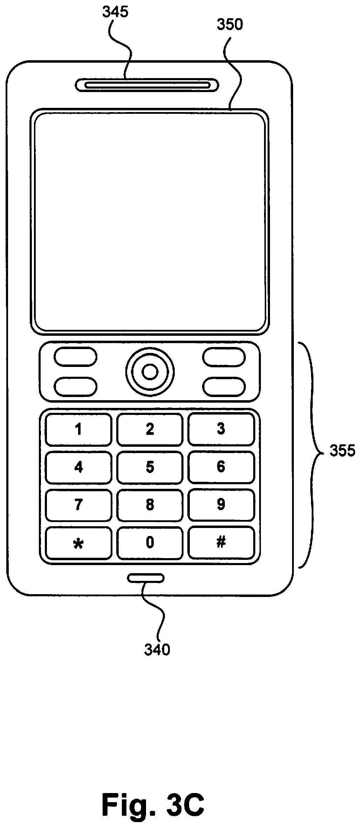

Fig. 3C is a diagram illustrating an exemplary implementation of UE 110 that includes a radiotelephone. As illustrated, UE 110 may include a microphone 340 (e.g., of input device 320) for entering audio information, a speaker 345 (e.g., of output device 325) for outputting audio information, a keypad 355 (e.g., of input device 320) for entering information or selecting functions, and a display 350 (e.g., of input device 320 and/or output device 325) for outputting visual information and/or inputting information, selecting functions, etc.

Although Fig. 3C illustrates an exemplary implementation of UE 110, in other implementations, UE 110 may include fewer, additional, or different exemplary components than those depicted in Fig. 3C.

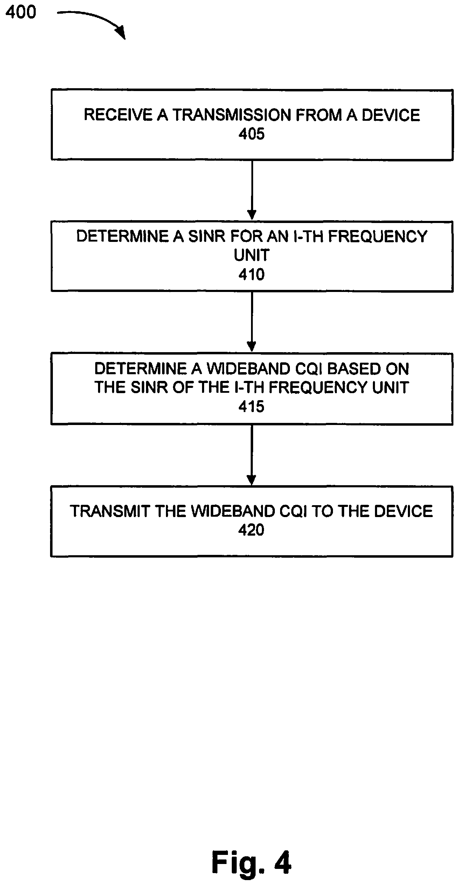

Described below, in connection with Fig. 4, are exemplary operations performed by wideband CQI calculator 335 to determine a wideband CQI(s). For purposes of discussion, the exemplary operations will be described based on communication system 100 depicted in Fig. IB. However, it will be appreciated that the exemplary operations may be performed in communication system 100 depicted in Fig. IA, in which different devices may be present. Based on the wideband CQI(s), wireless station may determine frequency selective SINR(s).

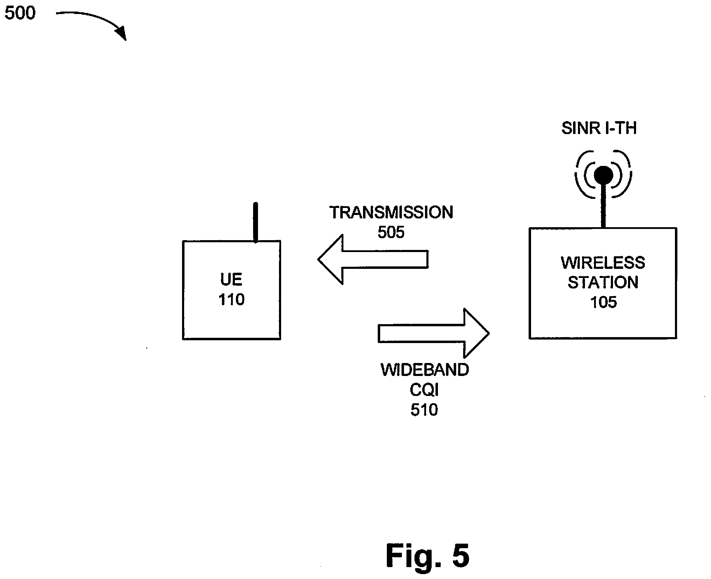

Fig. 4 is a flow diagram illustrating an exemplary process 400 that may be performed by UE 110 to calculate a wideband CQI. It will be appreciated that other methods, not specifically described, may be utilized to calculate the wideband CQI. In addition to Fig. 4, process 400 will be described in connection with Fig. 5. Fig. 5 is a diagram of an exemplary scenario 500 in which UE 110 may calculate the wideband CQI.

Process 400 begins with receiving a transmission from a device (block 405). For example, as illustrated in Fig. 5, wireless station 105 transmits a transmission 505 in the downlink (or forward channel) that is received by UE 110. Transmission 505 may include reference signals and/or may be transmitted on a pilot channel.

A SINR for an i-th frequency unit is determined (block 410). In the frequency domain, the frequency spectrum may be divided into $n$ frequency units. For example, in a OFDM communication system, the frequency spectrum may be divided into several sub-bands. A sub-band may include several frequency units (e.g., sub-carriers). In other communication systems, it will be appreciated that the frequency spectrum may be divided differently. In such instances, there may be a measured SINR value for at least one frequency unit, where the SINR for the i-th frequency unit is SINR.

The definition of SINR is $SINR = \frac{C}{I}$, where C represents the received signal power and $I$ represents the interference plus noise power. The SINR value for the at least one frequency unit may be derived through known techniques (e.g., a conventional symbol level SINR estimation algorithm).

A wideband CQI based on the SINR of the frequency unit is determined (block 415). Wideband CQI calculator 335 determines a wideband CQI ($CQI_{WB}$) for example, by either linear average or non-linear average. Utilizing a linear averaging method, for example, the wideband CQI may be calculated based on the following exemplary expression:

$$CQI_m = Q(\sum_{i=1}^{n} SINR_i/n) \qquad (1)$$

where $Q\{\}$ represents a quantization function.

In another implementation, wideband CQI calculator 335 may determine a wideband CQI utilizing a non-linear method. In such instances, a symbol-level mutual information (SI) value may be calculated for the at least one i-th frequency unit ($SI_1$) based on the following exemplary expression:

$$SI_1 = F(SINR_i) \qquad (2)$$

where $F\{\}$ represents the function on how to calculate modulated SI from SINR. The $F\{\}$ function is described by Lei wan et al., in "A Fading-Insensitive Performance Metric For A Unified Link Quality Model," Wireless Communications and Network Conference 2006, Vol. 4, pgs. 2110-2114.

Next, an average SI ($SI_{avg}$) may be calculated based on the following exemplary expression:

$$SI_{avg} = \sum_{i=1}^{n} SI_i/n \qquad (3)$$

The wideband CQI may then be calculated based on the following exemplary expression:

$$CQI_{WB} = Q\{F^{-1}(SI_{avg})\} \qquad (4)$$

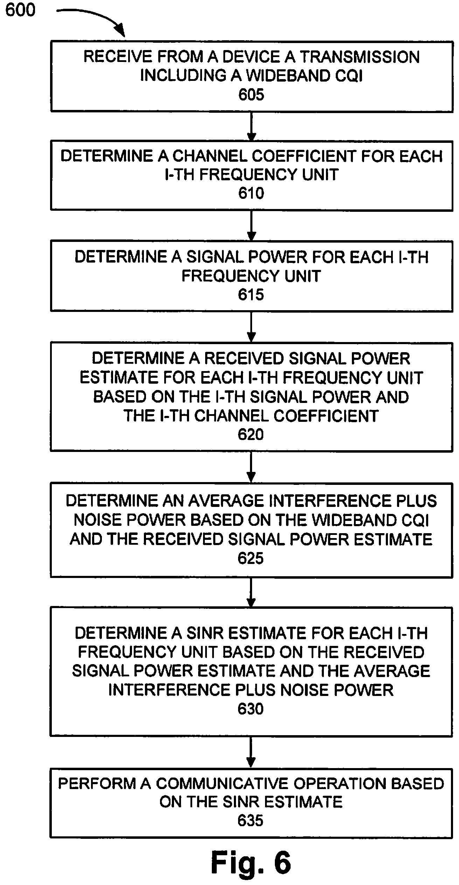

The wideband CQI is transmitted to the device (block 420). For example, as illustrated in Fig. 5, UE 110 transmits the wideband CQI to wireless station 105. Wireless station 105 receives the wideband CQI and calculate a frequency selective SINR, as described in greater detail below in connection with Fig. 6.

Although Fig. 4 illustrates an exemplary process 400 for determining a wideband CQI, in other implementations, exemplary process 400 may include additional, different, and/or fewer operations than those described in connection with Fig. 4. For example, in other embodiments, UE 110 may employ a different measuring and reporting scheme. In one approach, UE 110 may measure C and *I* separately for the frequency units in the downlink. Correspondingly, UE 110 may generate a wideband C and a wideband *I*. UE 110 reports the generated wideband C and I separately to wireless station 105 or report C/I as a wideband CQI to wireless station 105.

As previously described, in a TDD system, channel reciprocity exists. Based on channel reciprocity and the receipt of a wideband CQI, wireless station 105 estimates a SINR for the i-th frequency unit. An exemplary process in which wireless station 105 calculates the estimated SINR for the i-th frequency unit is described below.

Fig. 6 is a flow diagram illustrating an exemplary process 600 that may be performed by wireless station 105 for determining the SINR for an i-th frequency unit.

Process 600 begins with receiving a transmission including a wideband CQI (block 605). For example, UE 105 transmits a wideband CQI to wireless station 105, as previously described in connection with block 420 of Fig. 4.

A channel coefficient for each i-th frequency unit is determined (block 610). Based on channel reciprocity, SINR I-th FBE 220 calculates a channel coefficient $H$ for each i-th frequency unit ($H_i$). For example, the channel coefficient $H$ may be estimated based on reference signals (e.g., sounding signals or pilots) or other types of UL transmissions.

A signal power for each i-th frequency unit is determined (block 615). Wireless station 105 has knowledge of the transmitted signal power ($S_i$) for each i-th frequency unit on the downlink when the wideband CQI was determined at UE 110.

A received signal power estimate for each i-th frequency unit is determined based on the i-th signal power and the i-th channel coefficient (block 620). SINR I-th FBE 220 may calculate an estimated received signal power ($Cest_i$) based on the following exemplary expression:

$$Cest_i = S_i ||H_i||^2 \qquad (6)$$

An average interference-plus-noise power is determined based on the wideband CQI and the estimated received signal power (block 625). SINR I-th FBE 220 may calculate an average interference-plus-noise power ($I_{avg}$) based on the following exemplary expression:

$$I_{avg} = \sum_{i=1}^{n} Cest_i / (nCQI_{WB}) \qquad (7)$$

Although expression (7) represents a linear method approach to determine $I_{avg}$, in other implementations, $I_{avg}$ may be determined based on a non-linear method approach. While it is recognized the interference may be colored in the frequency domain, it is assumed herein that the interference is flat in the frequency domain. Based on this assumption, an SINR estimate for the i-th frequency unit may be determined.

An SINR estimate for each i-th frequency unit is determined based on the estimated received signal power and the average interference-plus-noise power (block 630). SINR I-th FBE 220 may calculate a SINR estimate for the i-th frequency unit based on the following exemplary expression:

$$SINR\_est_i = Q\{Cest_i / I_{avg}\} \qquad (8)$$

where Q represents the quantization function. For example, a highest CQI threshold and a lowest CQI threshold may be provided, and an interval between them may be divided uniformly or non-uniformly into several scales. The CQI may be quantized as the highest scale that is among the scales that may be smaller than the CQI.

Alternatively, SINR I-th FBE 220 may calculate the SINR estimate for the i-th frequency unit based on the following exemplary expression:

$$SINR\_est_i = Q\{CQI_{WB} \frac{S_i||H_i||^2}{\frac{1}{n}\Sigma_{l=1}^{n} S_i||H_i||^2}\} \qquad (9)$$

A communicative operation may be performed based on the estimated SINR (block 635). Wireless station 105 may perform various communicative operations based on the SINR estimate. For example, wireless station 105 may perform link adaptation, scheduling, power control, timing control, modulation, beamforming, equalization, filtering, etc., with respect to UE 110.

Although, Fig. 6 illustrates an exemplary process 600 for determining a SINR estimate for the i-th frequency unit, in other implementations, exemplary process 600 may include additional, different, and/or fewer operations than those described in connection with Fig. 6. For example, although process 600 is described as determining a SINR estimate for each i-th frequency unit, process 600 may be implemented to determine a SINR estimate for less than each i-th frequency unit. Additionally, or alternatively, although process 600 has been described with respect to frequency units (e.g., sub-carriers), other bandwidths within the frequency domain may be contemplated (e.g., sub-bands).

As described herein, a device (e.g., a wireless station) may estimate a SINR at a finer frequency level or frequency band than a reported CQI (e.g., a wideband CQI). The SINR may be estimated with minimal overhead, yet improving the performance of link adaptation, scheduling, etc., as well as overall system performance, such as throughput, etc.

The term "frequency band," may include, for example, one or more sub-carriers, one or more sub-bands, one or more frequency units, and/or some other frequency division of the wideband CQI. The term "wideband" may include the whole frequency domain or a portion of the whole frequency domain. Thus, depending on the bandwidth of the wideband CQI, the frequency band will be of a finer granularity. For example, if the wideband CQI corresponds to the whole frequency domain then the frequency band may correspond to, for example, one or more sub-bands or one or more sub-carriers. On the other hand, if the wideband CQI corresponds to a portion of the frequency domain, the frequency band may correspond to, for example, one or more sub-carriers. In this regard, it will be appreciated that the frequency band may be considered a frequency division of bandwidth with respect to the wideband CQI.

The foregoing description of implementations provides illustration, but is not intended to be exhaustive or to limit the implementations to the precise form disclosed. Modifications and variations are possible in light of the above teachings or may be acquired from practice of the teachings. For example, the concepts described herein may be implemented to generate CQI(s) outside a measurement bandwidth assuming interference does not vary significantly within the frequency domain. It is assumed that the interference *I* is measured in a bandwidth part which includes one or several sub-bands, and the interference in another sub-band *i* which is out of the bandwidth part does not vary significantly from the measuring bandwidth. Then the received DL signal power of the sub-band *i* can be calculated based on expression (6), and the corresponding estimated SINR for sub-band *i* may be determined based on the following exemplary expression:

$$SINR_{est_i} = Q\left\{\frac{S_i||H_i||^2}{I}\right\}$$

$$(10)$$

In addition, while a series of blocks has been described with regard to the processes illustrated in Figs 4 and 6, the order of the blocks may be modified in other implementations. Further, non-dependent blocks may be performed in parallel. Further one or more blocks may be omitted. It will be appreciated that one or more of the processes described herein may be implemented as a computer program. The computer program may be stored on a computer readable medium or represented in some other type of medium (e.g., a transmission medium).

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code - it being understood that software and control hardware can be designed to implement the aspects based on the description herein.

**Claims**

1. A method performed at a first device (105) that is communicatively coupled to a second device (110), wherein the first device (105) and the second device (110) are comprised in a communication system (100), the method comprises the following steps:

transmitting a signal (505) to the second device (110);
receiving (605), from the second device (110), a first transmission including a wideband channel quality indicator that is a single value calculated by averaging, over all frequency bands of the transmitted signal (505), a signal-to-interference-plus-noise-ratio for each frequency band of the transmitted signal (505), wherein the signal-to-interference-plus-noise-ratio is from a perspective of the second device (110);
determining (620) a received signal power estimate for each frequency band of the transmitted signal (505) based on power of the transmitted signal (505) for each frequency band of the transmitted signal (505) and a channel coefficient for each frequency band of the transmitted signal (505);
determining (625) an average interference-plus-noise of all frequency bands of the transmitted signal (505) according to a ratio of the determined received signal power estimate for each frequency band of the transmitted signal (505) and the wideband channel quality indicator;
determining (630) a signal-to-interference-plus-noise-ratio estimate for each frequency band of the transmitted signal (505) according to a ratio of the associated received signal power estimate for each frequency band of the transmitted signal (505) and the average interference-plus-noise; and
performing (635) at least one of link adaptation and scheduling using the determined signal-to-interference-plus-noise ratio estimate for each frequency band of the transmitted signal (505).

2. The method of claim 1, where the communication system (100) includes a time-divided duplex-based network.

3. The method of claim 1, where the first device (105) includes a base station.

4. A device (105) for a communication system (100), the device (105) comprising:

one or more antennas (210); and
a processing system (200) configured to:

transmit a signal (505) to another device (110);
receive, from the other device (110) via the one or more antennas (210), a transmission that includes a wideband channel quality indicator associated with the other device (110), wherein the wideband channel quality indicator is a single value calculated by averaging, over all frequency bands of the transmitted signal (505), a signal-to-interference-plus-noise-ratio for each frequency band of the transmitted signal (505), wherein the signal-to-interference-plus-noise-ratio is from a perspective of the other device (110);
calculate a received signal power estimate for each frequency band of the transmitted signal (505) based on power of the transmitted signal (505) for each frequency band of the transmitted signal (505) and a channel coefficient for each frequency band of the transmitted signal (505);
calculate an average interference-plus-noise of all frequency bands of the transmitted signal (505) according to a ratio of the determined received signal power estimate for each frequency band of the transmitted signal (505) and the wideband channel quality indicator;
calculate a signal-to-interference-plus-noise estimate for each frequency band of the transmitted signal (505) according to a ratio of the associated received signal power estimate for each frequency band of the transmitted signal (505) and the average interference-plus-noise; and
perform at least one of link adaptation and scheduling using the signal-to-interference-plus-noise estimate for each frequency band of the transmitted signal (505).

5. The device (105) of claim 4, where the device (105) includes a base station.

6. The device (105) of claim 4, where the base station operates according to a time-division communication standard.

7. The device (105) of claim 4, where calculating the signal-to-interference-plus-noise estimate for each frequency band of the transmitted signal (505) is based on a quantization of the ratio of the received signal power estimate for each frequency band of the transmitted signal (505) and the average interference-plus noise.

8. A computer-readable medium containing instructions which, when executed by at least one processor of a device, wherein the device (105) is capable of receiving and transmitting, cause the at least one processor to carry out the method according to claim 1.

9. The computer-readable medium of claim 8, containing instructions which, when executed by the at least one processor causes a calculation of the channel coefficient for each frequency band taken into account that there is channel reciprocity.

**Patentansprüche**

1. Verfahren, das durch eine erste Vorrichtung (105) durchgeführt wird, die kommunikativ an eine zweite Vorrichtung (110) gekoppelt ist, wobei die erste Vorrichtung (105) und die zweite Vorrichtung (110) in einem Kommunikationssystem (100) enthalten sind, wobei das Verfahren die folgenden Schritte umfasst:

   Übertragen eines Signals (505) an die zweite Vorrichtung (110),
   Empfangen (605), von der zweiten Vorrichtung (110), einer ersten Übertragung, die einen Breitbandkanalqualitätsindikator beinhaltet, bei dem es sich um einen einzigen Wert handelt, der durch Bilden eines Mittelwertes eines Signal-zu-Interferenz-plus-Rausch-Verhältnisses für jedes Frequenzband des übertragenen Signals (505) über alle Frequenzbänder des übertragenen Signals (505) berechnet wird, wobei das Signal-zu-Interferenz-plus-Rausch-Verhältnis aus einer Perspektive der zweiten Vorrichtung (110) ist,
   Bestimmen (620) einer empfangenen Signalleistungsschätzung für jedes Frequenzband des übertragenen Signals (505) auf Grundlage einer Leistung des übertragenen Signals (505) für jedes Frequenzband des übertragenen Signals (505) und eines Kanalkoeffizienten für jedes Frequenzband des übertragenen Signals (505),
   Bestimmen (625) einer durchschnittlichen Interferenz-plus-Rausch aller Frequenzbänder des übertragenen Signals (505) gemäß einem Verhältnis der bestimmten empfangenen Signalleistungsschätzung für jedes Frequenzband des übertragenen Signals (505) und dem Breitbandkanalqualitätsindikator,
   Bestimmen (630) einer Schätzung des Signal-zu-Interferenz-plus-Rausch-Verhältnisses für jedes Frequenzband des übertragenen Signals (505) gemäß dem Verhältnis der zugeordneten empfangenen Signalleistungsschätzung für jedes Frequenzband des übertragenen Signals (505) und der durchschnittlichen Interferenz-plus-Rausch, und
   Durchführen (635) von zumindest einem von einer Verbindungsanpassung und -planung unter Verwendung der bestimmten Schätzung des Signal-zu-Interferenz-plus-Rausch-Verhältnisses für jedes Frequenzband des übertragenen Signals (505) .

2. Verfahren nach Anspruch 1, wobei das Kommunikationssystem (100) ein zeitgeteiltes duplexbasiertes Netzwerk beinhaltet.

3. Verfahren nach Anspruch 1, wobei die erste Vorrichtung (105) eine Basisstation beinhaltet.

4. Vorrichtung (105) für ein Kommunikationssystem (100), wobei die Vorrichtung (105) Folgendes umfasst:

   eine oder mehrere Antennen (210); und
   ein Verarbeitungssystem (200), das zu Folgendem konfiguriert ist:

   Übertragen eines Signals (505) an eine weitere Vorrichtung (110),
   Empfangen, von der weiteren Vorrichtung (110), einer Übertragung über die eine oder mehreren Antennen (210), die einen Breitbandkanalqualitätsindikator beinhaltet, welcher der weiteren Vorrichtung (110) zugeordnet ist, wobei es sich bei dem Breitbandkanalqualitätsindikator um einen einzigen Wert handelt, der durch Bilden eines Mittelwertes eines Signal-zu-Interferenz-plus-Rausch-Verhältnisses für jedes Frequenzband des übertragenen Signals (505) über alle Frequenzbänder des übertragenen Signals (505) berechnet wird, wobei das Signal-zu-Interferenz-plus-Rausch-Verhältnis aus einer Perspektive der weiteren Vorrichtung (110) ist,
   Berechnen einer empfangenen Signalleistungsschätzung für jedes Frequenzband des übertragenen Signals (505) auf Grundlage einer Leistung des übertragenen Signals (505) für jedes Frequenzband des übertragenen Signals (505) und eines Kanalkoeffizienten für jedes Frequenzband des übertragenen Signals (505),
   Berechnen einer durchschnittlichen Interferenz-plus-Rausch aller Frequenzbänder des übertragenen Signals (505) gemäß einem Verhältnis der bestimmten empfangenen Signalleistungsschätzung für jedes Frequenzband des übertragenen Signals (505) und dem Breitbandkanalqualitätsindikator,
   Berechnen einer Schätzung des Signal-zu-Interferenz-plus-Rausch-Verhältnisses für jedes Frequenzband des übertragenen Signals (505) gemäß dem Verhältnis der zugeordneten empfangenen Signalleistungsschätzung für jedes Frequenzband des übertragenen Signals (505) und der durchschnittlichen Interferenz-plus-Rausch, und

Durchführen von zumindest einem von einer Verbindungsanpassung und -planung unter Verwendung der Schätzung des Signal-zu-Interferenz-plus-Rausch-Verhältnisses für jedes Frequenzband des übertragenen Signals (505).

**5.** Vorrichtung (105) nach Anspruch 4, wobei die Vorrichtung (105) eine Basisstation beinhaltet.

**6.** Vorrichtung (105) nach Anspruch 4, wobei die Basisstation gemäß einem Standard für die Zeitmultiplexkommunikation betrieben wird.

**7.** Vorrichtung (105) nach Anspruch 4, wobei das Berechnen der Signal-zu-Interferenz-plus-Rausch-Schätzung für jedes Frequenzband des übertragenen Signals (505) auf einer Quantifizierung des Verhältnisses der empfangenen Signalleistungsschätzung für jedes Frequenzband des übertragenen Signals (505) und der durchschnittlichen Interferenz-plus-Rausch basiert.

**8.** Computerlesbares Medium, das Anweisungen enthält, die bei Ausführung durch zumindest einen Prozessor einer Vorrichtung den zumindest einen Prozessor dazu veranlassen, das Verfahren nach Anspruch 1 auszuführen, wobei die Vorrichtung (105) in der Lage ist, zu empfangen und zu übertragen.

**9.** Computerlesbares Medium nach Anspruch 8, das Anweisungen enthält, die bei Ausführung durch den zumindest einen Prozessor eine Berechnung des Kanalkoeffizienten für jedes Frequenzband veranlassen, wobei berücksichtigt wird, dass eine Kanalreziprozität vorliegt.

## Revendications

**1.** Procédé réalisé au niveau d'un premier dispositif (105) qui est couplé en communication à un second dispositif (110), dans lequel le premier dispositif (105) et le second dispositif (110) sont compris dans un système de communication (100), le procédé comprenant les étapes suivantes :

la transmission d'un signal (505) au second dispositif (110) ;
la réception (605), en provenance du second dispositif (110), d'une première transmission comprenant un indicateur de qualité de canal à large bande qui est une valeur unique calculée en calculant la moyenne, sur toutes les bandes de fréquences du signal transmis (505), d'un rapport signal sur interférence plus bruit pour chaque bande de fréquences du signal transmis (505), dans lequel le rapport signal sur interférence plus bruit est du point de vue du second dispositif (110) ;
la détermination (620) d'une estimation de puissance de signal reçu pour chaque bande de fréquences du signal transmis (505) sur la base de la puissance du signal transmis (505) pour chaque bande de fréquences du signal transmis (505) et d'un coefficient de canal pour chaque bande de fréquences du signal transmis (505) ;
la détermination (625) d'une puissance interférence plus bruit moyenne de toutes les bandes de fréquences du signal transmis (505) en fonction d'un rapport de l'estimation de puissance de signal reçu déterminé pour chaque bande de fréquences du signal transmis (505) et de l'indicateur de qualité de canal à large bande ;
la détermination (630) d'une estimation d'un rapport signal sur interférence plus bruit pour chaque bande de fréquences du signal transmis (505) en fonction d'un rapport de l'estimation de puissance de signal reçu associé pour chaque bande de fréquences du signal transmis (505) et de la puissance interférence plus bruit moyenne ; et
la réalisation (635) d'au moins une opération parmi une liaison, une adaptation et une planification à l'aide de l'estimation du rapport signal sur interférence plus bruit déterminé pour chaque bande de fréquences du signal transmis (505).

**2.** Procédé selon la revendication 1, dans lequel le système de communication (100) comprend un réseau à base de duplex à répartition dans le temps.

**3.** Procédé selon la revendication 1, dans lequel le premier dispositif (105) comprend une station de base.

**4.** Dispositif (105) pour un système de communication (100), le dispositif (105) comprenant :

une ou plusieurs antennes (210) ; et

un système de traitement (200) configuré pour :

transmettre un signal (505) à un autre dispositif (110) ;

recevoir, en provenance de l'autre dispositif (110) via la ou les antennes (210), une transmission qui comprend un indicateur de qualité de canal à large bande associé à l'autre dispositif (110), dans lequel l'indicateur de qualité de canal à large bande est une valeur unique calculée en calculant la moyenne, sur toutes les bandes de fréquences du signal transmis (505), d'un rapport signal sur interférence plus bruit pour chaque bande de fréquences du signal transmis (505), dans lequel le rapport signal sur interférence plus bruit est du point de vue de l'autre dispositif (110) ;

calculer une estimation de puissance de signal reçu pour chaque bande de fréquences du signal transmis (505) sur la base de la puissance du signal transmis (505) pour chaque bande de fréquences du signal transmis (505) et d'un coefficient de canal pour chaque bande de fréquences du signal transmis (505) ;

calculer une puissance interférence plus bruit moyenne de toutes les bandes de fréquences du signal transmis (505) en fonction d'un rapport de l'estimation de puissance de signal reçu déterminé pour chaque bande de fréquences du signal transmis (505) et de l'indicateur de qualité de canal à large bande ;

calculer une estimation d'un rapport signal sur interférence plus bruit pour chaque bande de fréquences du signal transmis (505) en fonction d'un rapport de l'estimation de puissance de signal reçu associé pour chaque bande de fréquences du signal transmis (505) et de la puissance interférence plus bruit moyenne ; et

réaliser au moins une opération parmi une liaison, une adaptation et une planification à l'aide de l'estimation du rapport signal sur interférence plus bruit pour chaque bande de fréquences du signal transmis (505).

5.  Dispositif (105) selon la revendication 4, dans lequel le dispositif (105) comprend une station de base.

6.  Dispositif (105) selon la revendication 4, dans lequel la station de base fonctionne conformément à un standard de communication à répartition dans le temps.

7.  Dispositif (105) selon la revendication 4, dans lequel le calcul de l'estimation d'un rapport signal sur interférence plus bruit pour chaque bande de fréquences du signal transmis (505) est basé sur une quantification du rapport de l'estimation de puissance de signal reçu pour chaque bande de fréquences du signal transmis (505) et de la puissance interférence plus bruit moyenne.

8.  Support lisible par ordinateur contenant des instructions qui, une fois exécutées par au moins un processeur d'un dispositif, dans lequel le dispositif (105) est capable de réaliser la réception et la transmission, amènent l'au moins un processeur à mettre en œuvre le procédé selon la revendication 1.

9.  Support lisible par ordinateur selon la revendication 8, contenant des instructions qui, une fois exécutées par l'au moins un processeur, conduisent à un calcul du coefficient de canal pour chaque bande de fréquences prenant en compte qu'il existe une réciprocité de canal.

100

DEVICE
110

DEVICE
105

EP 2 321 919 B1

**Fig. 1A**

100

UE
110

WIRELESS
STATION
105

**FIG. 1B**

EP 2 321 919 B1

**Fig. 2A**

EP 2 321 919 B1

EP 2 321 919 B1

200

SINR I-TH FREQUENCY BAND ESTIMATOR
220

**Fig. 2B**

110

INPUT DEVICE
320

310

MEMORY
315

PROCESSING
SYSTEM
300

TRANSCEIVER
305

OUTPUT DEVICE
325

**Fig. 3A**

EP 2 321 919 B1

WIDEBAND CQI CALCULATOR
335

**Fig. 3B**

EP 2 321 919 B1

**Fig. 3C**

400

```
┌─────────────────────────────────────────┐
│   RECEIVE A TRANSMISSION FROM A DEVICE    │
│                    405                    │
└─────────────────────────────────────────┘
                     │
                     ▼
┌─────────────────────────────────────────┐
│   DETERMINE A SINR FOR AN I-TH FREQUENCY  │
│                   UNIT                    │
│                    410                    │
└─────────────────────────────────────────┘
                     │
                     ▼
┌─────────────────────────────────────────┐
│   DETERMINE A WIDEBAND CQI BASED ON       │
│   THE SINR OF THE I-TH FREQUENCY UNIT     │
│                    415                    │
└─────────────────────────────────────────┘
                     │
                     ▼
┌─────────────────────────────────────────┐
│   TRANSMIT THE WIDEBAND CQI TO THE DEVICE │
│                    420                    │
└─────────────────────────────────────────┘
```

# Fig. 4

500 ⟶

SINR I-TH

TRANSMISSION
505

←

UE
110

→

WIDEBAND
CQI
510

WIRELESS
STATION
105

**Fig. 5**

600

RECEIVE FROM A DEVICE A TRANSMISSION
INCLUDING A WIDEBAND CQI
605

DETERMINE A CHANNEL COEFFICIENT FOR EACH
I-TH FREQUENCY UNIT
610

DETERMINE A SIGNAL POWER FOR EACH I-TH
FREQUENCY UNIT
615

DETERMINE A RECEIVED SIGNAL POWER
ESTIMATE FOR EACH I-TH FREQUENCY UNIT
BASED ON THE I-TH SIGNAL POWER AND
THE I-TH CHANNEL COEFFICIENT
620

DETERMINE AN AVERAGE INTERFERENCE PLUS
NOISE POWER BASED ON THE WIDEBAND CQI
AND THE RECEIVED SIGNAL POWER ESTIMATE
625

DETERMINE A SINR ESTIMATE FOR EACH I-TH
FREQUENCY UNIT BASED ON THE RECEIVED
SIGNAL POWER ESTIMATE AND THE AVERAGE
INTERFERENCE PLUS NOISE POWER
630

PERFORM A COMMUNICATIVE OPERATION BASED
ON THE SINR ESTIMATE
635

# Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Y. HARA et al.** Pilot-Based Channel Quality Reporting for OFDMA/TDD Systems with Cochannel Interference. *IEICE Trans. Commun,* 09 September 2007, vol. E90-B (9), 2532-2540
- Performance of Downlink UTRAN LTE under Control Channel Constraints. **D. LÓPEZ VILLA et al.** Vehicular Technology Conference. IEEE, 2008, 2512-2516
- **LEI WAN et al.** A Fading-Insensitive Performance Metric For A Unified Link Quality Model. *Wireless Communications and Network Conference,* 2006, vol. 4, 2110-2114